**Europäisches Patentamt**

**European Patent Office**

**Office européen des brevets**

(19)

(11) Veröffentlichungsnummer: **0 026 730**
**B1**

(12) **EUROPÄISCHE PATENTSCHRIFT**

(45) Veröffentlichungstag der Patentschrift:
28.09.83

(51) Int. Cl.³: **B 61 C 9/50, B 61 F 3/04**

(21) Anmeldenummer: **80730060.3**

(22) Anmeldetag: **27.08.80**

(54) Doppelachslängsantrieb für ein elektrisches Schienentriebfahrzeug.

(30) Priorität: **26.09.79 DE 2939392**

(43) Veröffentlichungstag der Anmeldung:
**08.04.81 Patentblatt 81/14**

(45) Bekanntmachung des Hinweises auf die Patenterteilung:
**28.09.83 Patentblatt 83/39**

(84) Benannte Vertragsstaaten:
**AT BE CH FR LI**

(56) Entgegenhaltungen:
**DE-A-2 626 635**
**DE-C-838 452**
**DE-C-2 514 265**

(73) Patentinhaber: **SIEMENS AKTIENGESELLSCHAFT,
Berlin und München Wittelsbacherplatz 2,
D-8000 München 2 (DE)**
Patentinhaber: **Thyssen Industrie AG, Am
Thyssenhaus 1, D-4300 Essen (DE)**

(72) Erfinder: **Kuhlow, Jürgen, Gothaallee 17,
D-1000 Berlin 19 (DE)**
Erfinder: **Susdorf, Roman, Epensteinstrasse 15,
D-1000 Berlin 51 (DE)**
Erfinder: **Bierlein, Ernst, Sperlingstrasse 14,
D-8502 Zirndorf-Weiherhof (DE)**
Erfinder: **Piepenbreier, Ernst, Wintenstrasse 15,
D-4300 Essen (DE)**

(74) Vertreter: **Mehl, Ernst, Dipl.-Ing. et al, Postfach 22 01 76,
D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Doppelachslängsantrieb für ein elektrisches Schienentriebfahrzeug

Die Erfindung betrifft einen Doppelachslängsantrieb für ein elektrisches Schienenfahrzeug, bei dem der in Längsrichtung des Fahrzeuges zwischen zwei Treibachsen liegende elektrische Fahrmotor jede der Treibachsen über ein Winkelgetriebe antreibt, dessen Ritzel jeweils über eine Längsverschiebung zulassende, insbesondere zentrierende Kupplung mit einem Ende der Läuferwelle des Fahrmotors verbunden ist.

Ein derartiger Doppelachslängsantrieb ist aus der DE-C-838 452 bekannt. Bei diesem Antrieb sind die Gehäuse des Winkelgetriebes an das Gehäuse des elektrischen Fahrmotors jeweils angeflanscht und zwischen dem Ritzel und der Läuferwelle ist eine Bogenzahnkupplung angeordnet, die Längsverschiebungen zuläßt. Diese Kupplung liegt zwischen dem Lager des Ritzels und dem Lager des Fahrmotors.

Ein Doppelachslängsantrieb der eingangs genannten Art ist auch aus der DE-C-2 514 265 bekannt, wobei hier der elektrische Fahrmotor gehäuselos ausgebildet ist und die Läuferwelle in den Getriebegehäusen gelagert ist. Als Verbindung zwischen der Läuferwelle und dem Ritzel dient jeweils eine Längsverschiebung zulassende und zugleich zentrierende Kupplung, die zwischen Läuferwelle und Lager angeordnet ist. Bei einem derartig in integrierter Bauweise ausgeführtem Doppelachslängsantrieb läßt sich eine Gewichtsersparnis gegenüber der konservativen Bauweise erzielen.

Bei diesen bekannten Doppelachslängsantrieben stützt sich der gesamte Antrieb allein auf die die Treibachse jeweils mit Spiel umgebenden Hohlwellen des Winkelgetriebes ab, die ihrerseits mit einer elastischen Kupplung mit den Treibachsen verbunden sind. Es ist nun bei extremen Betriebsstörungen bereits vorgekommen, daß der Außenstrang des Antriebes, bestehend aus den Gehäusen oder stehenden Teilen des Getriebes und Fahrmotors, in denen das Reaktionsmoment geführt ist, im Getriebehalsbereich gebrochen ist. Bei einem derartigen Bruch entfällt die Abstützung des Doppelachslängsantriebes und das Antriebsaggregat fällt zwischen die Schienen in den Schwellenbereich, wodurch für das Schienenfahrzeug grundsätzlich eine Entgleisungsgefahr gegeben ist.

Bei stationären Einrichtungen ist es bekannt, DE-A-2 626 635, zwischen zwei Wellen als Drehmomentbegrenzungsvorrichtung eine Sollbruchmuffe vorzusehen. Diese bekannte Sollbruchmuffe ist über zwei Flansche sowohl mit der einen treibenden Welle als auch mit der beide Wellen verbindenden Kupplung verbunden. Die Sicherheitsmuffe erstreckt sich also in axialer Richtung vor dem Nabenkörper der Kupplung. Außerdem enthält die Kupplung ein elastisches Glied, das eine Vorspannung in axialer Richtung erzeugt und bei normalem Betrieb die Längenausdehnungen der beiden Wellen ermöglicht. Tritt dagegen durch Überlastung ein Bruch der Sollbruchmuffe auf, so wird ein Teil der Muffe sofort zurückgezogen, um eine Reibung an der Bruchstelle zu vermeiden.

Bei Doppelachslängsantrieben wurden bisher, trotz der möglichen Bruchgefahr bei Störungen, keine Sollbruchstellen vorgesehen. Es wurden vielmehr zusätzliche Fangvorrichtungen im Drehgestell angeordnet, die ein Herunterfallen des Antriebsaggregates vermeiden sollten.

Der Erfindung liegt die Aufgabe zugrunde, eine Gefährdung bei elektrischen Schienentriebfahrzeugen mit Doppelachslängsantrieben durch Herabfallen des Antriebsaggregates auch bei extremen Betriebsstörungen zu vermeiden.

Zur Lösung dieser Aufgabe ist bei einem Doppelachslängsantrieb der eingangs beschriebenen Art gemäß der Erfindung in jeder der Kupplungen in einer Kupplungshälfte eine zwischen dem Nabenkörper und dem Kupplungsflansch liegende Sollbruchstelle vorgesehen, der Kupplungsflansch ist in axialer, zu der anderen Kupplungshälfte weisender Richtung vorgespannt und zwischen dem Vorspannelement und dem Kupplungsflansch ist eine Gleitfläche angeordnet. Durch eine derartige Sollbruchstelle im Wellenstrang, d. h. im Innenstrang des Doppelachslängsantriebes, die in die Kupplung integriert ist und somit keinen zusätzlichen Raum in axialer Richtung erfordert, wird erreicht, daß bei Betriebsstörungen, die oberhalb der Betriebsbelastung liegen, aber unterhalb der Störbelastung, die zum Bruch des Getriebegehäuses führt, durch Bruch der Sollbruchstelle die Drehmomentübertragung im Wellenstrang unterbrochen wird. Gleichzeitig wird durch die axiale Vorspannung der abgebrochene Kupplungsflansch im Rahmen des in der Kupplung gegebenen Spiels gegen die andere Kupplungshälfte geschoben, so daß ein Reiben der Bruchstellen gegeneinander oder sogar ein Festfressen nicht möglich ist. Die zwischen dem Vorspannelement und dem Kupplungsflansch liegende Gleitfläche nimmt dabei die auftretende Drehzahldifferenz zwischen dem Vorspannelement und dem Kupplungsflansch nach Art eines Gleitlagers ohne zusätzlichen Schaden auf.

Ein Bruch der Sollbruchstelle hat zwar zur Folge, daß der elektrische Fahrmotor wegen des Wegfalls der Belastung höhere Drehzahlen als die Betriebsdrehzahl annimmt, aber er wird dann bei einer bestimmten Drehzahl elektrisch abgeschaltet, da elektrische Fahrmotoren stets mit einem sogenannten Schleuderschutz ausgestattet sind. Ein Bruch des Getriebegehäuses wird so mit Sicherheit vermieden.

Derartige Sollbruchstellen können auch mit Vorteil bei einem Doppelachsantrieb eingesetzt werden, dessen Fahrmotor zur mechanischen Entkopplung als elektrischer Motor mit zwei in einem gemeinsamen Ständer angeordneten Teilläufern ausgebildet ist.

Es ist besonders zweckmäßig, die Sollbruchstelle durch zwei radial gegeneinander versetzte Querschnittseinengungen zu bilden, wobei die auf kleinerem Radius befindliche auf der der anderen Kupplungshälfte zugewandten Seite liegt. Dadurch entsteht im Fall einer Überbeanspruchung der Sollbruchstelle ein schräg verlaufender Bruch, der das axiale Verschieben des abgebrochenen Kupplungsflansches durch eine entsprechend gerichtete Kraftkomponente noch unterstützt.

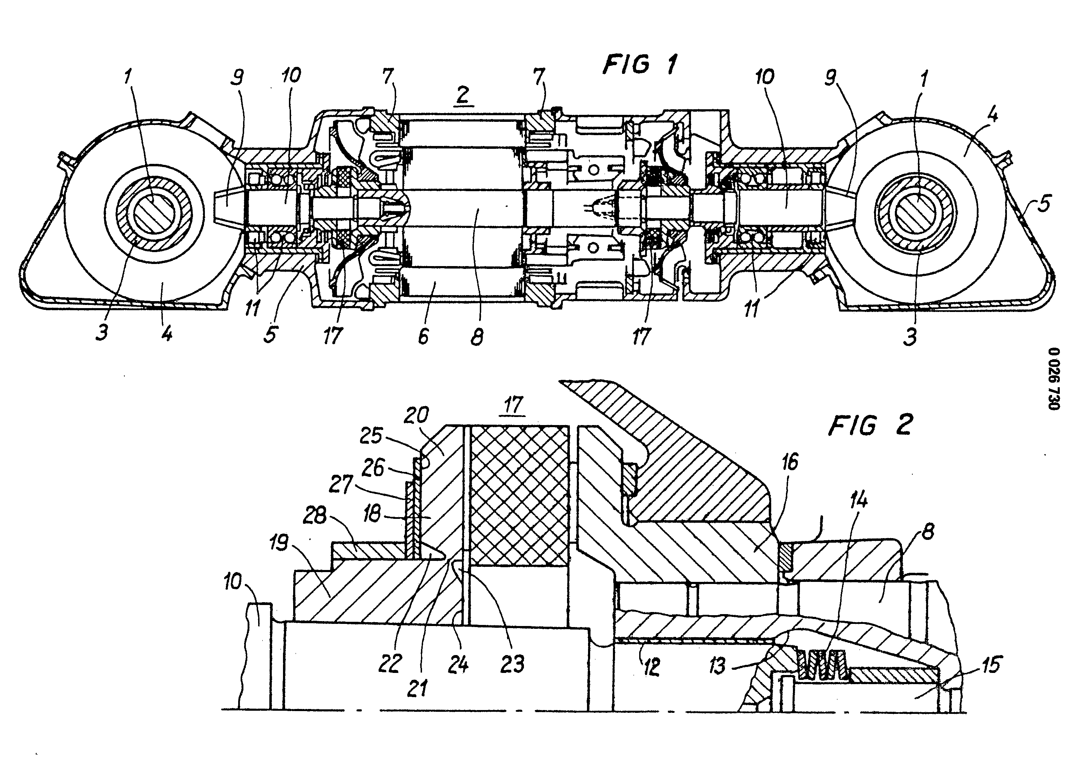

Im folgenden sei die Erfindung noch anhand des in den Fig. 1 und 2 der Zeichnung dargestellten Ausführungsbeispiels näher erläutert.

Fig. 1 zeigt schematisch einen Längsschnitt durch einen gemäß der Erfindung ausgebildeten Doppelachslängsantrieb, in Fig. 2 ist in vergrößertem Maßstab die Kupplung zwischen Läuferwelle und Ritzelwelle dargestellt.

Bei einem schienengebundenen Triebfahrzeug für den Nahverkehr werden jeweils zwei Treibachsen 1 von einem zwischen ihnen in Längsrichtung des Triebfahrzeuges angeordneten elektrischen Fahrmotor 2 angetrieben. Jede Treibachse 1 ist dazu von einer Hohlwelle 3 umgeben, die das Großrad 4 eines Winkelgetriebes trägt. Die Verbindung zwischen der Hohlwelle 3 und der Treibachse 1 erfolgt in an sich bekannter Weise über nicht dargestellte elastische Kupplungen. Das Getriebegehäuse 5 ist ebenfalls auf der Hohlwelle 3 gelagert.

Der elektrische Fahrmotor 2 ist gehäuselos ausgebildet. Sein am Rücken versteiftes Ständerblechpaket 6 ist zwischen den Druckplatten 7 verspannt, an denen unmittelbar die Getriebegehäuse 5 befestigt sind. Diese tragen somit den Ständer des Fahrmotors 2, so daß für diesen eigene Lagerschilde entfallen.

Die Läuferwelle 8 des Fahrmotors 2 treibt beide Treibachsen 1 über Ritzel 9 gleichzeitig an. Die Ritzel 9 sitzen jeweils auf Wellenstümpfen 10, die in den Getriebegehäusen 5 über Wälzlager 11 gelagert sind. In der Läuferwelle 8 sind die Wellenstümpfe 10 unter Zwischenschaltung einer Lagerbuchse 12 in einer Innenbohrung 13 längsverschieblich gelagert. Zur axialen Fixierung dienen unter Vorspannung stehende Tellerfedern 14, die auf einen in die Läuferwelle 8 eingeschraubten Zapfen 15 geführt sind. Die Läuferwelle 8 ist somit unter Vorspannung schwimmend zwischen den beiden Wellenstümpfen gelagert. Die Vorspannung der Tellerfedern 14 ist in der Lage, Längenänderungen der Läuferwelle 8 infolge der während des Betriebes des elektrischen Fahrmotors 2 auftretenden größeren Erwärmung des Läufers gegenüber dem Ständer auszugleichen. Auf diese Weise wird der Läufer jeweils in die magnetische Mitte zurückgeführt.

Um die Drehmomentübertragung zwischen der Läuferwelle 8 und den Wellenstümpfen 10 zu ermöglichen, ist auf der Läuferwelle 8 die eine Kupplungshälfte 16 einer Klauenkupplung 17 angeordnet, deren andere Kupplungshälfte 18 mit Hilfe des Nabenkörpers 19 auf dem Wellenstumpf 10 befestigt ist. In der Kupplungshälfte 18 ist zwischen dem Nabenkörper 19 und dem Kupplungsflansch 20 eine Sollbruchstelle 21 vorgesehen, die aus zwei radial gegeneinander versetzten Querschnittseinengungen 22 und 23 gebildet ist, derart, daß die auf kleinerem Radius befindliche Querschnittseinengung 23 auf der der anderen Kupplungshälfte 16 zugewandten Stirnfläche 24 der Kupplungshälfte 18 liegt. Auf der äußeren Stirnfläche 25 des Kupplungsflansches 20 ist eine Gleitscheibe 26 angeordnet, an die eine unter Vorspannung stehende Tellerfeder 27 angreift, die von dem Stützring 28 auf dem Nabenkörper 19 gehalten ist.

Die Sollbruchstelle 21 ist für einen abgegrenzten Bruchbereich ausgelegt, dessen untere Grenze genügend weit oberhalb der Betriebsbelastung liegt und dessen obere Grenze unterhalb der Störbelastung liegt, bei welcher das Getriebegehäuse 5 brechen würde. Treten nun beim Betrieb des Doppelachslängsantriebes infolge von Betriebsstörungen so hohe Belastungen auf, daß die Sollbruchstelle 21 bricht, so entsteht, gegeben durch die besondere Anordnung der beiden Querschnittseinengungen 22 und 23 eine schräg verlaufende Bruchfläche. Beim Bruch wird infolge der Vorspannung der Tellerfeder 27 der abgebrochene Kupplungsflansch 20 im Rahmen des innerhalb der Klauenkupplung 17 vorhandenen Spiels in axialer Richtung zur Kupplungshälfte 16 hin verlagert, so daß die Bruchflächen der Sollbruchstelle 21 nicht mehr aneinander reiben können, was die Gefahr eines Festfressens zur Folge haben könnte. Durch den Bruch der Sollbruchstelle 21 ist somit die Drehmomentübertragung über die Klauenkupplung 17 unterbrochen, wobei allerdings der Kupplungsflansch 20 formschlüssig in der Kupplungshälfte 16 gehalten wird. Der elektrische Fahrmotor 2 ist nun entlastet und wird nach Ansteigen seiner Drehzahl elektrisch von dem vorhandenen Schleuderschutz abgeschaltet. Damit können im Außenstrang keine übergroßen Reaktionsmomente mehr auftreten, die einen Bruch des Getriebegehäuses 5 zur Folge haben könnten.

**Patentansprüche**

1. Doppelachslängsantrieb für ein elektrisches Schienenfahrzeug, bei dem der in Längsrichtung des Fahrzeuges zwischen zwei Treibachsen (1) liegende elektrische Fahrmotor (2) jede der Treibachsen (1) über ein Winkelgetriebe antreibt, dessen Ritzel (9) jeweils über eine Längsverschiebungen zulassende, insbesondere zentrierende Kupplung (17) mit einem Ende der Läuferwelle (8) des Fahrmotors (1) verbunden ist, dadurch gekennzeichnet, daß in jeder der Kupplungen (17) in einer Kupplungshälfte (18) eine zwischen dem Nabenkörper (19) und dem Kupplungsflansch (20) liegende Sollbruchstelle (21) vorgesehen ist, daß der Kupplungsflansch (20) in axialer, zu der anderen Kupplungshälfte (16) weisender Richtung vorgespannt ist, und daß zwischen einem Vorspannelement (27) und dem Kupplungsflansch (20) eine Gleitfläche (26) angeordnet ist.

2. Doppelachslängsantrieb nach Anspruch 1, dadurch gekennzeichnet, daß die Sollbruchstelle (21) durch zwei radial gegeneinander versetzte Querschnittseinengungen (22, 23) gebildet ist, wobei die auf kleinerem Radius befindliche (23) auf der der anderen Kupplungshälfte (16) zugewandten Seite (24) liegt.

3. Doppellängsantrieb nach Anspruch 1 oder 2, dadurch gekennzeichnet, daß als Vorspannelement eine Tellerfeder (27) verwendet ist.

4. Doppelachslängsantrieb nach Anspruch 1 oder 2, dadurch gekennzeichnet, daß die Sollbruchstelle (21) in einer Klauenkupplung (17) angeordnet ist.

## Claims

1. Double-axle longitudinal drive for an electric rail vehicle wherein the electric traction motor located between two drive axles (1) in the longitudinal direction of the vehicle drives each of the drive axles (1) via a mitre gear whose pinion (9) is connected to one end of the rotor shaft (8) via a coupling (17) which permits longitudinal displacements and in particular has a centring function, characterised in that in each of the couplings (17), in one coupling half (18) there is arranged a theoretical breaking point (21) which is located between the hub body (19) and the coupling flange (20), that the coupling flange (20) is biased in an axial direction pointing towards the other coupling half (16), and that a sliding surface (26) is arranged between a biassing element (27) and the coupling flange (20).

2. Double-axle longitudinal drive as claimed in claim 1, characterised in that the theoretical breaking point (21) is formed by two cross-sectional constrictions (22, 23) radially offset relative to one another, where the constriction located on the smaller radius (23) lies on the side facing towards the other coupling half (16).

3. Double-axle longitudinal drive as claimed in claim 1 or 2, characterised in that a cup spring (27) is used as biassing element.

4. Double-axle longitudinal drive as claimed in claim 1 or 2, characterised in that the theoretical breaking point (21) is arranged in a claw coupling (17).

## Revendications

1. Transmission longitudinale à deux essieux pour un véhicule ferroviaire à traction électrique, dans lequel le moteur électrique de traction (2) disposé suivant la direction longitudinale du véhicule entre les deux essieux moteurs (1) entraine chacun des essieux moteurs (1) par un engrenage angulaire, dont le pignon (9) est relié par un accouplement (17) autorisant un déplacement longitudinal, notamment un centrage, à une extrémité de l'arbre de rotor (8) du moteur de traction (1), caractérisée en ce que dans chacun des accouplements (17) est prévu dans une moitié d'accouplement (18) un emplacement (21) destiné à se rompre se trouvant entre le corps de moyeu (19) et le flasque d'accouplement (20), en ce que le flasque d'accouplement (20) est mis sous tension initiale dans le sens axial allant vers l'autre moitié d'accouplement (16), et en ce qu'une surface de glissement (26) est interposée entre un élément de mise sous tension préalable (27) et le flasque d'accouplement (20).

2. Transmission longitudinale à deux essieux selon la revendication 1, caractérisée en ce que l'emplacement (21) destiné à se rompre est constitué de deux rétrécissements de section droite (22, 23) décalés radialement l'un par rapport à l'autre, celui se trouvant (23) sur le rayon le plus petit étant de côté (24) situé vers l'autre moitié d'accouplement (16).

3. Transmission longitudinale à deux essieux suivant la revendication 1 ou 2, caractérisée en ce qu'un ressort Belleville (27) est utilisé comme élément de mise sous tension préalable.

4. Transmission longitudinale à deux essieux suivant la revendication 1 ou 2, caractérisée en ce que l'emplacement (21) destiné à se rompre est disposé dans un accouplement à clabots (17).

FIG 1

FIG 2

0 026 730